# FASCICULE DE BREVET EUROPEEN

(11) **EP 4 072 386 B1**
(45) Date de publication et mention de la délivrance du brevet: **03.04.2024**
(21) Numéro de dépôt: 20817399.7
(22) Date de dépôt: 08.12.2020
(51) Int. Cl.: A47J 36/02, A47J 37/10

(54) **DISPOSITIF DE CUISSON COMPORTANT UN FOND DIFFUSEUR MULTICOUCHES**
KOCHGERÄT MIT EINEM MEHRSCHICHTIGEN BODEN
COOKING DEVICE INCLUDING A MULTI-LAYER DIFFUSER BASE

(30) Priorité: 10.12.2019 FR 1914099
(43) Date de publication de la demande: 19.10.2022
(73) Titulaire: SEB S.A., 69130 Ecully (FR)
(72) Inventeur: RUBIO, Martin, 74150 RUMILLY (FR)
(74) Mandataire: SEB Développement
(86) Numéro de dépôt international: PCT/EP2020/085135
(87) Numéro de publication internationale: WO 2021/116127

(56) Documents cités:
- WO-A1-2018/151716
- FR-A1- 3 070 245
- US-A- 4 541 411
- US-A1- 2011 041 708

## Description

La présente invention concerne le domaine technique des dispositifs de cuisson comportant un fond diffuseur multicouches prévu pour être disposé sur un foyer de chauffe.

La présente invention concerne notamment les articles culinaires tels que poêle, casserole, sauteuse, faitout, cuve d'autocuiseur, grill, prévus pour être utilisés sur un foyer de chauffe électrique et/ou sur un foyer de chauffe à combustion.

La présente invention concerne également un récipient de cuisson ou un support de cuisson appartenant à un appareil électroménager chauffant comportant un foyer de chauffe sur lequel peut être disposé ledit récipient de cuisson ou ledit support de cuisson.

Il est connu de réaliser un dispositif de cuisson comportant un support de cuisson présentant une face de cuisson et une face de chauffe, ainsi qu'un fond diffuseur comprenant une couche en aluminium assemblée métallurgiquement avec la face de chauffe. La bonne conductivité thermique de l'aluminium permet de répartir dans le fond diffuseur la chaleur transmise par le foyer de chauffe, ce qui contribue à améliorer l'homogénéité de chauffe du support de cuisson.

Un inconvénient d'une telle réalisation réside dans le fait qu'une épaisseur importante d'aluminium peut s'avérer nécessaire pour obtenir une homogénéité de température satisfaisante et/ou éviter les points de surchauffe susceptibles d'entraîner des phénomènes de brûlé des aliments disposés sur le support de cuisson.

Le document US4541411 divulgue un dispositif de cuisson comportant une couche de graphite anisotrope encapsulée entre deux autres couches qui peuvent être en aluminium. Toutefois ce dispositif de cuisson présente une paroi latérale formée par ces deux autres couches assemblées entre elles.

Un but de l'invention est de proposer un dispositif de cuisson dans lequel l'homogénéité de chauffe de la face de chauffe peut être améliorée, sans nécessiter d'augmenter notoirement la masse et/ou l'épaisseur du dispositif de cuisson.

Un autre but de l'invention est de proposer un dispositif de cuisson dans lequel la température maximale atteinte sur la face de chauffe peut être améliorée, sans nécessiter d'augmenter notoirement la masse et/ou l'épaisseur du dispositif de cuisson.

Un autre but de l'invention est de proposer un procédé d'obtention d'un dispositif de cuisson dans lequel l'homogénéité de chauffe de la face de chauffe peut être améliorée, sans nécessiter d'augmenter notoirement la masse et/ou l'épaisseur du dispositif de cuisson.

Un autre but de l'invention est de proposer un procédé d'obtention d'un dispositif de cuisson dans lequel la température maximale atteinte sur la face de chauffe peut être mieux maitrisée, sans nécessiter d'augmenter notoirement la masse et/ou l'épaisseur du dispositif de cuisson.

Ces buts sont atteints avec un dispositif de cuisson selon la revendication 1.

Ces buts sont atteints également avec un dispositif de cuisson selon la revendication 2.

En d'autres termes, la couche en aluminium est assemblée métallurgiquement avec l'autre couche en aluminium autour de la couche de graphite anisotrope. Ces dispositions permettent de promouvoir une bonne diffusion thermique transversalement à la face de chauffe, ce qui permet de réduire les points chauds et aussi de limiter les écarts de température sur la face de cuisson au-dessus du fond diffuseur multicouches. L'apparition des phénomènes de brûlé peut ainsi être retardée.

Selon la revendication 1, la couche de graphite anisotrope est adjacente à la face de chauffe, et l'autre couche en aluminium appartient à la face de chauffe. Ainsi la couche de graphite anisotrope est encapsulée entre la couche en aluminium appartenant au fond diffuseur multicouches et la face de chauffe appartenant au support de cuisson. Cette disposition permet de réduire la masse du dispositif de cuisson tout en assurant une bonne homogénéité thermique de la face de chauffe.

Selon la revendication 2, la couche en aluminium est agencée entre la face de chauffe et la couche de graphite anisotrope. Ainsi la couche de graphite anisotrope est encapsulée entre l'autre couche en aluminium appartenant au fond diffuseur multicouches et la couche en aluminium appartenant au fond diffuseur multicouches. Cette disposition permet d'envisager d'autres matériaux que l'aluminium pour le support de cuisson, par exemple de l'acier, et notamment de l'acier inoxydable.

L'autre couche en aluminium appartient au fond diffuseur multicouches.

La couche de graphite anisotrope est agencée entre la couche en aluminium et l'autre couche en aluminium.

La face de chauffe peut être réalisée en acier inoxydable. Le support de cuisson peut notamment être réalisé en acier inoxydable ou en matériau colaminé présentant une couche extérieure en acier inoxydable.

Selon une forme de réalisation, la couche de graphite anisotrope est annulaire.

Cette disposition permet d'améliorer la tenue mécanique de l'assemblage du fond diffuseur multicouches, en minimisant les incidences sur l'homogénéité thermique et les points chauds, les enjeux de diffusion de chaleur étant moins importants au centre du fond diffuseur multicouches.

La couche de graphite anisotrope peut comporter au moins une perforation. Cette disposition permet d'améliorer la tenue mécanique de l'assemblage du fond diffuseur multicouches, en permettant de lier la couche en aluminium au support de cuisson ou à l'autre couche en aluminium au travers de la ou des perforations. En alternative, la couche de graphite anisotrope peut être dépourvue de perforations.

Le fond diffuseur multicouches peut comprendre une couche extérieure réalisée en acier inoxydable ferritique. La couche extérieure réalisée en acier inoxydable ferritique permet d'obtenir un dispositif de cuisson pouvant être chauffé par induction.

La couche extérieure peut former une coupelle présentant un bord annulaire venant au contact de la face de chauffe. Cette disposition permet de masquer les parties en aluminium du fond diffuseur multicouches.

Ces buts sont atteints également avec un procédé d'obtention d'un dispositif de cuisson selon la revendication 9. de la couche de graphite anisotrope.

Le procédé peut comporter une étape de mise en forme du support de cuisson pour obtenir un récipient de cuisson.

Cette étape de mise en forme du support de cuisson peut être une étape préliminaire avant l'assemblage métallurgique, ou une étape ultérieure après l'assemblage métallurgique.

L'étape de mise en forme du support de cuisson peut notamment être réalisée par emboutissage ou par fluotournage.

La couche de graphite anisotrope et la couche en aluminium appartiennent à un fond diffuseur multicouches.

Ces buts sont atteints également avec un procédé d'obtention d'un dispositif de cuisson selon la revendication 12.

Le procédé peut comporter une étape de mise en forme du support de cuisson pour obtenir un récipient de cuisson.

Cette étape de mise en forme du support de cuisson peut être une étape préliminaire avant l'assemblage métallurgique, ou une étape ultérieure après l'assemblage métallurgique.

L'étape de mise en forme du support de cuisson peut notamment être réalisée par emboutissage ou par fluotournage.

La couche de graphite anisotrope, la couche en aluminium et l'autre couche en aluminium appartiennent à un fond diffuseur multicouches.

L'invention sera mieux comprise à l'étude de 8 exemples de réalisation, pris à titre nullement limitatif, illustrés dans les figures annexées dans lesquelles :

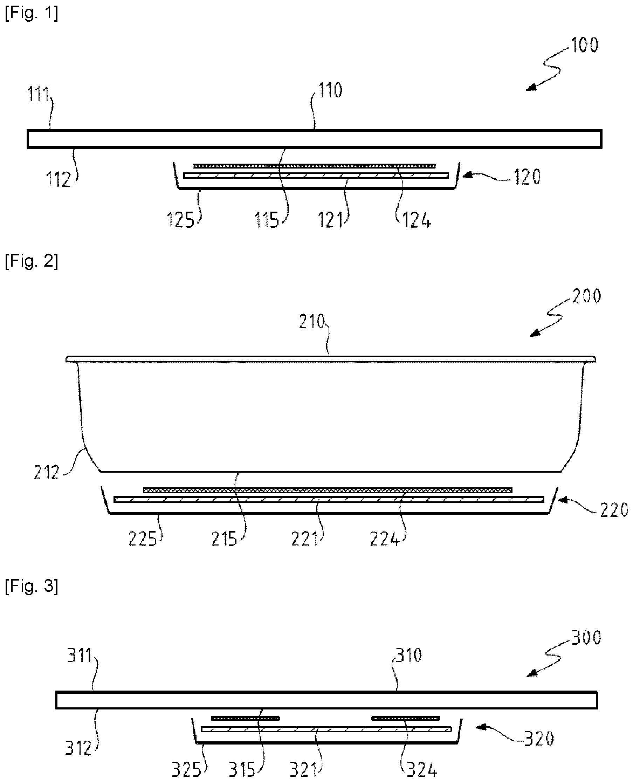

[Fig. 1] La figure 1 est une vue schématique des éléments d'un premier exemple de réalisation d'un dispositif de cuisson avant leur assemblage, ce dispositif de cuisson comportant un support de cuisson et un fond diffuseur multicouches comprenant une couche en aluminium et une couche de graphite anisotrope,
[Fig. 2] La figure 2 est une vue schématique des éléments d'un deuxième exemple de réalisation d'un dispositif de cuisson avant leur assemblage, ce dispositif de cuisson comportant un support de cuisson et un fond diffuseur multicouches comprenant une couche en aluminium et une couche de graphite anisotrope, dans lequel le support de cuisson est un récipient de cuisson,
[Fig. 3] La figure 3 est une vue schématique des éléments d'un troisième exemple de réalisation d'un dispositif de cuisson avant leur assemblage, ce dispositif de cuisson comportant un support de cuisson et un fond diffuseur multicouches comprenant une couche en aluminium et une couche de graphite anisotrope annulaire,

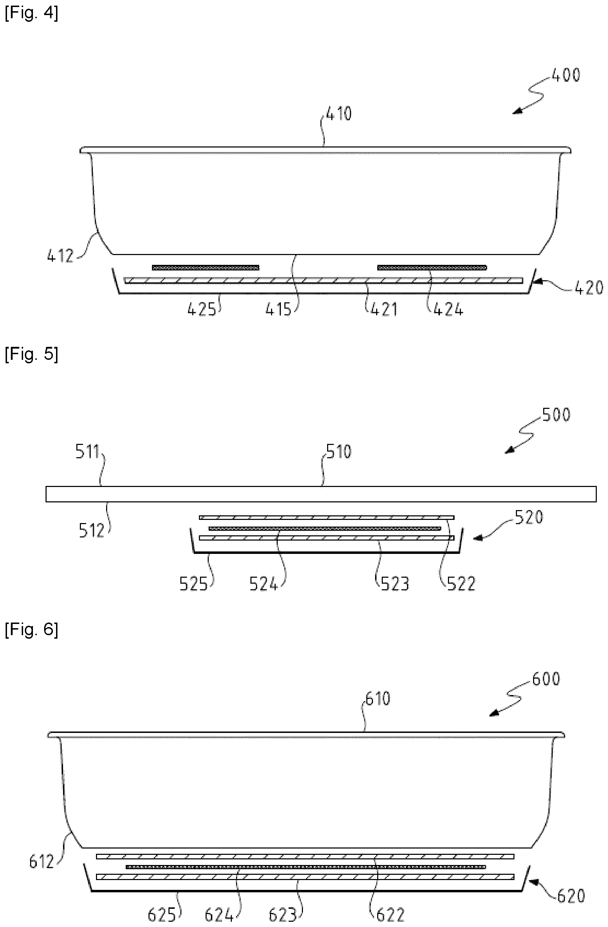

[Fig. 4] La figure 4 est une vue schématique des éléments d'un quatrième exemple de réalisation d'un dispositif de cuisson avant leur assemblage, ce dispositif de cuisson comportant un support de cuisson et un fond diffuseur multicouches comprenant une couche en aluminium et une couche de graphite anisotrope annulaire, dans lequel le support de cuisson est un récipient de cuisson,
[Fig. 5] La figure 5 est une vue schématique des éléments d'un cinquième exemple de réalisation d'un dispositif de cuisson avant leur assemblage, ce dispositif de cuisson comportant un fond diffuseur multicouches comprenant une couche en aluminium, une autre couche en aluminium et une couche de graphite anisotrope,
[Fig. 6] La figure 6 est une vue schématique des éléments d'un sixième exemple de réalisation d'un dispositif de cuisson avant leur assemblage, ce dispositif de cuisson comportant un fond diffuseur multicouches comprenant une couche en aluminium, une autre couche en aluminium et une couche de graphite anisotrope, dans lequel le support de cuisson est un récipient de cuisson,

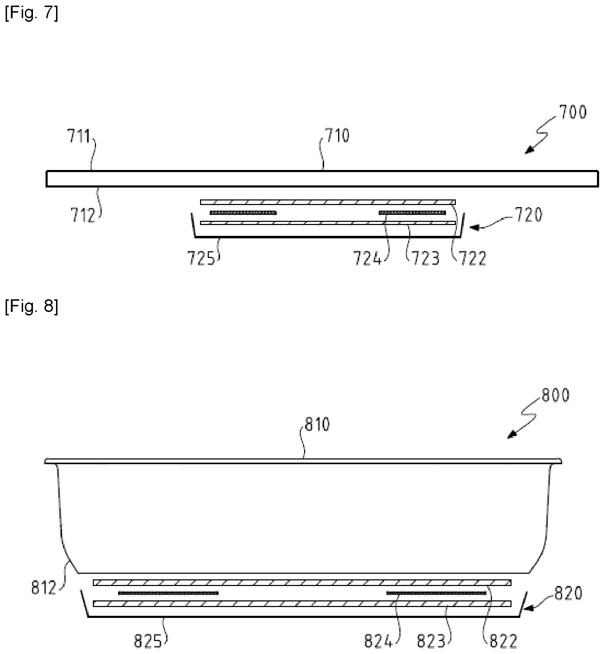

[Fig. 7] La figure 7 est une vue schématique des éléments d'un septième exemple de réalisation d'un dispositif de cuisson avant leur assemblage, ce dispositif de cuisson comportant un fond diffuseur multicouches comprenant une couche en aluminium, une autre couche en aluminium et une couche de graphite anisotrope annulaire,
[Fig. 8] La figure 8 est une vue schématique des éléments d'un huitième exemple de réalisation d'un dispositif de cuisson avant leur assemblage, ce dispositif de cuisson comportant un fond diffuseur multicouches comprenant une couche en aluminium, une autre couche en aluminium et une couche de graphite anisotrope annulaire, dans lequel le support de cuisson est un récipient de cuisson.

Les dispositifs de cuisson 100, 200, 300, 400, 500, 600, 700, 800 illustrés sur les figures 1 à 8 comportent un support de cuisson 110, 210, 310, 410, 510, 610, 710, 810 et un fond diffuseur multicouches 120, 220, 320, 420, 520, 620, 720, 820. Les figures 1 à 8 illustrent les éléments du support de cuisson 110, 210, 310, 410, 510, 610, 710, 810 et du fond diffuseur multicouches 120, 220, 320, 420, 520, 620, 720, 820 avant assemblage.

Le support de cuisson 110 ; 210 ; 310 ; 410 ; 510 ; 610 ; 710 ; 810 présente une face de cuisson 111 ; 311 ; 511 ; 711 et une face de chauffe 112 ; 212 ; 312 ; 412 ; 512 ; 612 ; 712 ; 812. Le support de cuisson 110, 210, 310, 410, 510, 610, 710, 810 peut être plan, tel que représenté sur les figures 1, 3, 5 et 7, ou former un récipient de cuisson comportant la face de chauffe 212 ; 412 ; 612 ; 812, tel que représenté sur les figures 2, 4, 6 et 8.

Le fond diffuseur multicouches 120 ; 220 ; 320 ; 420 ; 520 ; 620 ; 720 ; 820 comprend une couche en aluminium 121 ; 221 ; 321 ; 421 ; 522 ; 622 ; 722 ; 822 et une couche de graphite anisotrope 124 ; 224 ; 324 ; 424 ; 524 ; 624 ; 724 ; 824. Si désiré, le fond diffuseur multicouches 120 ; 220 ; 320 ; 420 ; 520 ; 620 ; 720 ; 820 peut comprendre une couche extérieure 125 ; 225 ; 325 ; 425 ; 525 ; 625 ; 725 ; 825 agencée à l'opposé du support de cuisson 110, 210, 310, 410, 510, 610, 710, 810. La couche extérieure 125 ; 225 ; 325 ; 425 ; 525 ; 625 ; 725 ; 825 peut notamment être réalisée en acier inoxydable ferritique. Si désiré, la couche extérieure 125 ; 225 ; 325 ; 425 ; 525 ; 625 ; 725 ; 825 peut former une coupelle présentant un bord annulaire venant au contact de la face de chauffe 112 ; 212 ; 312 ; 412 ; 512 ; 612 ; 712 ; 812. Tel que bien visible sur les figures 1 à 8, la couche en aluminium 121 ; 221 ; 321 ; 421 ; 522 ; 622 ; 722 ; 822 est plane. Tel que bien visible sur les figures 1 à 8, la couche de graphite anisotrope 124 ; 224 ; 324 ; 424 ; 524 ; 624 ; 724 ; 824 est plane.

La couche en aluminium 121 ; 221 ; 321 ; 421 ; 522 ; 622; 722; 822 est assemblée métallurgiquement avec la face de chauffe 112 ; 212 ; 312 ; 412 ; 512 ; 612 ; 712 ; 812 en laissant libre une partie de la face de chauffe 112 ; 212 ; 312 ; 412 ; 512 ; 612 ; 712 ; 812 autour de la couche en aluminium 121 ; 221 ; 321 ; 421 ; 522 ; 622 ; 722 ; 822. Si désiré la couche en aluminium 121 ; 221 ; 321 ; 421 ; 522 ; 622 ; 722 ; 822 peut être un disque.

La couche de graphite anisotrope 124 ; 224 ; 324 ; 424 ; 524 ; 624 ; 724 ; 824 encapsulée entre la couche en aluminium 121 ; 221 ; 321 ; 421 ; 522 ; 622 ; 722 ; 822 et une autre couche en aluminium 115 ; 215 ; 315 ; 415 ; 523 ; 623 ; 723 ; 823.

Dans les exemples de réalisation illustrés sur les figures 1 à 4, la couche de graphite anisotrope 124 ; 224 ; 324 ; 424 est adjacente à la face de chauffe 112 ; 212 ; 312 ; 412, et l'autre couche en aluminium 115 ; 215 ; 315 ; 415 appartient à la face de chauffe 112 ; 212 ; 312 ; 412. Le support de cuisson 110 ; 210 ; 310 ; 410 peut être réalisé en aluminium, formant ainsi l'autre couche en en aluminium 115 ; 215 ; 315 ; 415. Le support de cuisson 110 ; 210 ; 310 ; 410 peut aussi être réalisé en matériau colaminé comportant l'autre couche en aluminium 115 ; 215 ; 315 ; 415.

Dans les exemples de réalisation illustrés sur les figures 5 à 8, la couche en aluminium 522 ; 622 ; 722 ; 822 est agencée entre la face de chauffe 512 ; 612 ; 712 ; 812 et la couche de graphite anisotrope 524 ; 624 ; 724 ; 824. Si désiré, la face de chauffe 512 ; 612 ; 712 ; 812 peut alors être réalisée en acier inoxydable. La couche de graphite anisotrope 524 ; 624 ; 724 ; 824 est agencée entre la couche en aluminium 522 ; 622 ; 722 ; 822 et l'autre couche en aluminium 523 ; 623 ; 723 ; 823.

Tel que bien visible sur les figures 5 à 8, l'autre couche en aluminium 523 ; 623 ; 723 ; 823 appartient au fond diffuseur multicouches 520 ; 620 ; 720 ; 820. En d'autres termes, le fond diffuseur multicouches 520 ; 620 ; 720 ; 820 comprend aussi l'autre couche en aluminium 523 ; 623 ; 723 ; 823. Tel que bien visible sur les figures 5 à 8, l'autre couche en aluminium 523 ; 623 ; 723 ; 823 est agencée entre la couche de graphite anisotrope 524 ; 624 ; 724 ; 824 et la couche extérieure 525 ; 625 ; 725 ; 825. Tel que bien visible sur les figures 5 à 8, l'autre couche en aluminium 523 ; 623 ; 723 ; 823 est plane.

Dans les exemples de réalisation illustrés sur les figures 3, 4, 7 et 8, la couche de graphite anisotrope 324 ; 424 ; 724 ; 824 est annulaire.

La couche de graphite anisotrope 124 ; 224 ; 324 ; 424 ; 524 ; 624 ; 724 ; 824 peut comporter au moins une perforation (non représentée sur les figures) traversant l'épaisseur de la couche de graphite anisotrope 124 ; 224 ; 324 ; 424 ; 524 ; 624 ; 724 ; 824. De préférence alors, la couche de graphite anisotrope 124 ; 224 ; 324 ; 424 ; 524 ; 624 ; 724 ; 824 peut comporter plusieurs perforations traversant l'épaisseur de la couche de graphite anisotrope 124 ; 224 ; 324 ; 424 ; 524 ; 624 ; 724 ; 824.

En alternative, la couche de graphite anisotrope 124 ; 224 ; 324 ; 424 ; 524 ; 624 ; 724 ; 824 peut être dépourvue de perforations traversant l'épaisseur de la couche de graphite anisotrope 124 ; 224 ; 324 ; 424 ; 524 ; 624 ; 724 ; 824.

L'assemblage des dispositifs de cuisson 100 ; 200; 300; 400 illustrés sur les figures 1 à 4 est réalisé avec un procédé d'obtention comportant les étapes suivantes :
- Fourniture et/ou obtention d'une couche de graphite anisotrope 124 ; 224 ; 324 ; 424, d'une couche en aluminium 121 ; 221 ; 321 ; 421 apte à recouvrir la couche de graphite anisotrope 124 ; 224 ; 324 ; 424, et d'un support de cuisson 110 ; 210 ; 310 ; 410 comportant une face de chauffe 112 ; 212 ; 312 ; 412 présentant une autre couche en aluminium 115 ; 215 ; 315 ; 415 apte à recouvrir la couche en aluminium 121 ; 221 ; 321 ; 421 ;
- Empilage de la couche en aluminium 121 ; 221 ; 321 ; 421, de la couche de graphite anisotrope 124 ; 224 ; 324 ; 424 et du support de cuisson 110 ; 210 ; 310 ; 410, ou vice-versa, la couche de graphite anisotrope 124 ; 224 ; 324 ; 424 laissant libre une partie annulaire de la couche en aluminium 121 ; 221 ; 321 ; 421, la face de chauffe 112 ; 212 ; 312 ; 412 s'étendant autour de la couche en aluminium 121 ; 221 ; 321 ; 421 ;
- Assemblage métallurgique, par frappe à chaud ou par diffusion à chaud sous charge, de la face de chauffe 112 ; 212 ; 312 ; 412 en aluminium avec la couche en aluminium 121 ; 221 ; 321 ; 421 autour de la couche de graphite anisotrope 124 ; 224 ; 324 ; 424.

Ainsi avant l'assemblage métallurgique, la face de chauffe 112 ; 212 ; 312 ; 412 repose sur la couche de graphite anisotrope 124 ; 224 ; 324 ; 424, ou vice-versa.

L'assemblage métallurgique par frappe à chaud ou par diffusion à chaud sous charge de la face de chauffe 112 ; 212 ; 312 ; 412 en aluminium avec la couche en aluminium 121 ; 221 ; 321 ; 421 autour de la couche de graphite anisotrope 124 ; 224 ; 324 ; 424 permet d'encapsuler la couche de de graphite anisotrope 124 ; 224 ; 324 ; 424 entre la couche en aluminium 121 ; 221 ; 321 ; 421 et le support de cuisson 110 ; 210 ; 310 ; 410.

L'assemblage des dispositifs de cuisson 500 ; 600 ; 700 ; 800 illustrés sur les figures 5 à 8 est réalisé avec un procédé d'obtention comportant les étapes suivantes :
- Fourniture et/ou obtention d'une couche de graphite anisotrope 524 ; 624 ; 724 ; 824, d'une couche en aluminium 522 ; 622 ; 722 ; 822 apte à recouvrir la couche de graphite anisotrope 524 ; 624 ; 724 ; 824, d'une autre couche en aluminium 523 ; 623 ; 723 ; 823 apte à recouvrir la couche de graphite anisotrope 524 ; 624 ; 724 ; 824, et d'un support de cuisson 510 ; 610 ; 710 ; 810 comportant une face de chauffe 512 ; 612 ; 712 ; 812 apte à recouvrir la couche en aluminium 522 ; 622 ; 722 ; 822 ;
- Empilage de l'autre couche en aluminium 523 ; 623 ; 723 ; 823, de la couche de graphite anisotrope 524 ; 624 ; 724 ; 824, de la couche en aluminium 522 ; 622 ; 722 ; 822, et du support de cuisson 510 ; 610 ; 710 ; 810, ou vice-versa, la couche de graphite anisotrope 524 ; 624 ; 724 ; 824 laissant libre une partie annulaire de la couche en aluminium 522 ; 622 ; 722 ; 822, la couche de graphite anisotrope 524 ; 624 ; 724 ; 824 laissant libre une autre partie annulaire de l'autre couche en aluminium 523 ; 623 ; 723 ; 823, la partie annulaire de la couche en aluminium 522 ; 622 ; 722 ; 822 s'étendant de manière annulaire en regard de l'autre partie annulaire de l'autre couche en aluminium 523 ; 623 ; 723 ; 823, la face de chauffe 512 ; 612; 712; 812 s'étendant autour de la couche en aluminium 522 ; 622 ; 722 ; 822 ;
- Assemblage métallurgique, par frappe à chaud ou par diffusion à chaud sous charge, de la couche en aluminium 522 ; 622 ; 722 ; 822 d'une part avec la face de chauffe 512 ; 612 ; 712 ; 812 et d'autre part avec l'autre couche en aluminium 523 ; 623 ; 723 ; 823 autour de la couche de graphite anisotrope 524 ; 624 ; 724 ; 824.

Ainsi avant l'assemblage métallurgique, la face de chauffe 512 ; 612 ; 712 ; 812 repose sur la couche en aluminium 522 ; 622 ; 722 ; 822, ou vice-versa.

L'assemblage métallurgique par frappe à chaud ou par diffusion à chaud sous charge de la couche en aluminium 522 ; 622 ; 722 ; 822 d'une part avec la face de chauffe 512 ; 612 ; 712 ; 812 et d'autre part avec l'autre couche en aluminium 523 ; 623 ; 723 ; 823 autour de la couche de graphite anisotrope 524 ; 624 ; 724 ; 824 permet d'encapsuler la couche de graphite anisotrope 524 ; 624 ; 724 ; 824 entre la couche en aluminium 522 ; 622 ; 722 ; 822 et l'autre couche en aluminium 523 ; 623 ; 723 ; 823, et de lier la couche en aluminium 522 ; 622 ; 722 ; 822 au support de cuisson 510 ; 610 ; 710 ; 810.

Le fond diffuseur multicouches 120 ; 220 ; 320 ; 420 ; 520 ; 620 ; 720 ; 820 permet d'améliorer l'homogénéité thermique de la face de cuisson 111 ; 311 ; 511 ; 711 du support de cuisson 110 ; 210 ; 310 ; 410 ; 510 ; 610 ; 710 ; 810. La couche de graphite anisotrope 124 ; 224 ; 324; 424; 524 ; 624; 724; 824 permet de favoriser la diffusion des calories dans le plan du fond diffuseur multicouches 120 ; 220; 320 ; 420 ; 520 ; 620; 720; 820, du fait d'une conductivité thermique meilleure dans le plan de ladite couche que dans l'épaisseur de ladite couche. L'apparition de points chauds peut ainsi être retardée voire évitée. La meilleure diffusion des calories dans le plan du fond diffuseur multicouches 120 ; 220; 320 ; 420 ; 520 ; 620; 720; 820 permet d'envisager une réduction de l'épaisseur du fond diffuseur multicouches 120 ; 220 ; 320 ; 420 ; 520 ; 620 ; 720 ; 820. L'utilisation d'une couche de graphite anisotrope 124 ; 224 ; 324 ; 424 ; 524 ; 624 ; 724 ; 824 perforée et/ou annulaire permet d'améliorer la liaison métallurgique entre la couche en aluminium 121 ; 221 ; 321 ; 421 ; 522 ; 622 ; 722 ; 822 et l'autre couche en aluminium 115 ; 215 ; 315 ; 415 ; 523 ; 623 ; 723 ; 823.

Si désiré, le procédé d'obtention du dispositif de cuisson 100 ; 200 ; 300 ; 400 ; 500 ; 600 ; 700 ; 800 peut comporter une étape de mise en forme du support de cuisson 110 ; 210 ; 310 ; 410 ; 510 ; 610 ; 710 ; 810 pour obtenir un récipient de cuisson. L'étape de mise en forme du support de cuisson 110 ; 210 ; 310 ; 410 ; 510 ; 610; 710; 810 peut être une étape préliminaire avant l'assemblage métallurgique, par exemple une étape d'emboutissage du support de cuisson 110 ; 210 ; 310 ; 410 ; 510 ; 610 ; 710 ; 810. L'étape de mise en forme du support de cuisson 110 ; 210 ; 310 ; 410 ; 510 ; 610 ; 710 ; 810 peut être une étape ultérieure après l'assemblage métallurgique, par exemple une étape de fluotournage du support de cuisson 110 ; 210 ; 310 ; 410 ; 510 ; 610 ; 710 ; 810.

Diverses modifications et/ou améliorations évidentes pour l'homme du métier peuvent être apportées aux exemples de réalisation de l'invention décrits dans la présente description sans sortir du cadre de l'invention défini par les revendications annexées.

## Revendications

1. Dispositif de cuisson (100 ; 200 ; 300 ; 400) comportant un support de cuisson (110 ; 210 ; 310 ; 410) présentant une face de cuisson (111 ; 311) et une face de chauffe (112 ; 212 ; 312 ; 412), une couche de graphite anisotrope (124 ; 224 ; 324 ; 424) étant encapsulée entre une couche en aluminium (121 ; 221 ; 321 ; 421) et une autre couche en aluminium (115 ; 215 ; 315 ; 415), la couche en aluminium (121 ; 221 ; 321 ; 421) et la couche de graphite anisotrope (124 ; 224 ; 324 ; 424) appartenant à un fond diffuseur multicouches (120 ; 220 ; 320 ; 420), la couche de graphite anisotrope (124 ; 224 ; 324 ; 424) étant adjacente à la face de chauffe (112 ; 212 ; 312 ; 412), et l'autre couche en aluminium (115 ; 215 ; 315 ; 415) appartenant à la face de chauffe (112 ; 212 ; 312 ; 412),**caractérisé en ce que** la couche en aluminium (121 ; 221 ; 321 ; 421) est assemblée métallurgiquement avec la face de chauffe (112 ; 212 ; 312 ; 412) en laissant libre une partie de la face de chauffe (112 ; 212 ; 312 ; 412) autour de la couche en aluminium (121 ; 221 ; 321 ; 421).

2. Dispositif de cuisson (500 ; 600 ; 700 ; 800) comportant un support de cuisson (510 ; 610 ; 710 ; 810) présentant une face de cuisson (511 ; 711) et une face de chauffe (512 ; 612 ; 712 ; 812), une couche de graphite anisotrope (524 ; 624 ; 724 ; 824) étant encapsulée entre une couche en aluminium (522 ; 622 ; 722 ; 822) et une autre couche en aluminium (523 ; 623 ; 723 ; 823), la couche en aluminium (522 ; 622 ; 722 ; 822) et la couche de graphite anisotrope (524 ; 624 ; 724 ; 824) appartenant à un fond diffuseur multicouches (520 ; 620 ; 720 ; 820), la couche de graphite anisotrope (524 ; 624 ; 724 ; 824) étant agencée entre la couche en aluminium (522 ; 622 ; 722 ; 822) et l'autre couche en aluminium (523 ; 623 ; 723 ; 823), **caractérisé en ce que** la couche en aluminium (522 ; 622 ; 722 ; 822) est assemblée métallurgiquement avec la face de chauffe (512 ; 612 ; 712 ; 812) en laissant libre une partie de la face de chauffe (512 ; 612 ; 712 ; 812) autour de la couche en aluminium (522 ; 622 ; 722 ; 822), **en ce que** la couche en aluminium (522 ; 622 ; 722 ; 822) est agencée entre la face de chauffe (512 ; 612 ; 712 ; 812) et la couche de graphite anisotrope (524 ; 624 ; 724 ; 824), **en ce que** l'autre couche en aluminium (523 ; 623 ; 723 ; 823) appartient au fond diffuseur multicouches (420 ; 520 ; 620 ; 720 ; 820).

3. Dispositif de cuisson (500 ; 600 ; 700 ; 800) selon la revendication 2, **caractérisé en ce que** la face de chauffe (512 ; 612 ; 712 ; 812) est réalisée en acier inoxydable.

4. Dispositif de cuisson (300 ; 400 ; 700 ; 800) selon l'une des revendications 1 à 3, **caractérisé en ce que** la couche de graphite anisotrope (324 ; 424 ; 724 ; 824) est annulaire.

5. Dispositif de cuisson (100 ; 200 ; 300 ; 400 ; 500 ; 600 ; 700 ; 800) selon l'une des revendications 1 à 4, **caractérisé en ce que** la couche de graphite anisotrope (124 ; 224 ; 324 ; 424 ; 524 ; 624 ; 724 ; 824) comporte au moins une perforation.

6. Dispositif de cuisson (100 ; 200 ; 300 ; 400 ; 500 ; 600 ; 700 ; 800) selon l'une des revendications 1 à 5, **caractérisé en ce que** la couche de graphite anisotrope (124 ; 224 ; 524 ; 624) est dépourvue de perforations.

7. Dispositif de cuisson (100 ; 200 ; 300 ; 400 ; 500 ; 600 ; 700 ; 800) selon l'une des revendications 1 à 6, **caractérisé en ce que** le fond diffuseur multicouches (120 ; 220 ; 320 ; 420 ; 520 ; 620 ; 720 ; 820) comprend une couche extérieure (125 ; 225 ; 325 ; 425 ; 525 ; 625 ; 725 ; 825) réalisée en acier inoxydable ferritique.

8. Dispositif de cuisson (100 ; 200 ; 300 ; 400 ; 500 ; 600 ; 700 ; 800) selon la revendication 7, **caractérisé en ce que** la couche extérieure (125 ; 225 ; 325 ; 425 ; 525 ; 625 ; 725 ; 825) forme une coupelle présentant un bord annulaire venant au contact de la face de chauffe (112 ; 212 ; 312 ; 412 ; 512 ; 612 ; 712 ; 812).

9. Procédé d'obtention d'un dispositif de cuisson (100; 200; 300; 400) comportant les étapes suivantes :
- Fourniture et/ou obtention d'une couche de graphite anisotrope (124 ; 224 ; 324 ; 424), d'une couche en aluminium (121 ; 221 ; 321 ; 421) apte à recouvrir la couche de graphite anisotrope (124 ; 224 ; 324 ; 424), et d'un support de cuisson (110 ; 210 ; 310 ; 410) comportant une face de chauffe (112 ; 212 ; 312 ; 412) présentant une autre couche en aluminium (115 ; 215 ; 315 ; 415) apte à recouvrir la couche en aluminium (121 ; 221 ; 321 ; 421) ;
- Empilage de la couche en aluminium (121 ; 221 ; 321 ; 421), de la couche de graphite anisotrope (124 ; 224 ; 324 ; 424) et du support de cuisson (110 ; 210 ; 310 ; 410), ou vice-versa, la couche de graphite anisotrope (124 ; 224 ; 324 ; 424) laissant libre une partie annulaire de la couche en aluminium (121 ; 221 ; 321 ; 421), la face de chauffe (112 ; 212 ; 312 ; 412) s'étendant autour de la couche en aluminium (121 ; 221 ; 321 ; 421), la couche de graphite anisotrope (124 ; 224 ; 324 ; 424) et la couche en aluminium (121 ; 221 ; 321 ; 421) appartenant à un fond diffuseur multicouches (120 ; 220 ; 320 ; 420) ;
- Assemblage métallurgique, par frappe à chaud ou par diffusion à chaud sous charge, de la face de chauffe (112 ; 212 ; 312 ; 412) en aluminium avec la couche en aluminium (121 ; 221 ; 321 ; 421) autour de la couche de graphite anisotrope (124 ; 224 ; 324 ; 424), la couche en aluminium (121 ; 221 ; 321 ; 421) étant assemblée métallurgiquement avec la face de chauffe (112 ; 212 ; 312 ; 412) en laissant libre une partie de la face de chauffe (112 ; 212 ; 312 ; 412) autour de la couche en aluminium (121 ; 221 ; 321 ; 421).

10. Procédé d'obtention d'un dispositif de cuisson (100 ; 200 ; 300 ; 400) selon la revendication 9, **caractérisé en ce qu'**il comporte une étape de mise en forme du support de cuisson (110 ; 210 ; 310 ; 410) pour obtenir un récipient de cuisson.

11. Procédé d'obtention d'un dispositif de cuisson (100 ; 200 ; 300 ; 400) selon la revendication 10, **caractérisé en ce que** l'étape de mise en forme du support de cuisson (110; 210 ; 310 ; 410) est réalisée par emboutissage ou par fluotournage.

12. Procédé d'obtention d'un dispositif de cuisson (500; 600; 700; 800) comportant les étapes suivantes :
- Fourniture et/ou obtention d'une couche de graphite anisotrope (524 ; 624 ; 724 ; 824), d'une couche en aluminium (522 ; 622 ; 722 ; 822) apte à recouvrir la couche de graphite anisotrope (524 ; 624 ; 724 ; 824), d'une autre couche en aluminium (523 ; 623 ; 723 ; 823) apte à recouvrir la couche de graphite anisotrope (524 ; 624 ; 724 ; 824), et d'un support de cuisson (510 ; 610 ; 710 ; 810) comportant une face de chauffe (512 ; 612 ; 712 ; 812) apte à recouvrir la couche en aluminium (522 ; 622 ; 722 ; 822) ;
- Empilage de l'autre couche en aluminium (523 ; 623 ; 723 ; 823), de la couche de graphite anisotrope (524 ; 624 ; 724 ; 824), de la couche en aluminium (522 ; 622 ; 722 ; 822), et du support de cuisson (510 ; 610 ; 710 ; 810), ou vice-versa, la couche de graphite anisotrope (524 ; 624 ; 724 ; 824) laissant libre une partie annulaire de la couche en aluminium (522 ; 622 ; 722 ; 822), la couche de graphite anisotrope (524 ; 624 ; 724 ; 824) laissant libre une autre partie annulaire de l'autre couche en aluminium (523 ; 623 ; 723 ; 823), la partie annulaire de la couche en aluminium (522 ; 622 ; 722 ; 822) s'étendant de manière annulaire en regard de l'autre partie annulaire de l'autre couche en aluminium (523 ; 623 ; 723 ; 823), la face de chauffe (512 ; 612 ; 712 ; 812) s'étendant autour de la couche en aluminium (522 ; 622 ; 722 ; 822), la couche de graphite anisotrope (524 ; 624 ; 724 ; 824), la couche en aluminium (522 ; 622 ; 722 ; 822) et l'autre couche en aluminium (523 ; 623 ; 723 ; 823) appartenant à un fond diffuseur multicouches (520 ; 620 ; 720 ; 820) ;
- Assemblage métallurgique, par frappe à chaud ou par diffusion à chaud sous charge, de la couche en aluminium (522 ; 622 ; 722 ; 822) d'une part avec la face de chauffe (512 ; 612 ; 712 ; 812) et d'autre part avec l'autre couche en aluminium (523 ; 623 ; 723 ; 823) autour de la couche de graphite anisotrope (524 ; 624 ; 724 ; 824), la couche en aluminium (522 ; 622 ; 722 ; 822) étant assemblée métallurgiquement avec la face de chauffe (512 ; 612 ; 712 ; 812) en laissant libre une partie de la face de chauffe (512 ; 612 ; 712 ; 812) autour de la couche en aluminium (522 ; 622 ; 722 ; 822).

13. Procédé d'obtention d'un dispositif de cuisson (500 ; 600 ; 700 ; 800) selon la revendication 12, **caractérisé en ce qu'**il comporte une étape de mise en forme du support de cuisson (510 ; 610 ; 710 ; 810) pour obtenir un récipient de cuisson.

14. Procédé d'obtention d'un dispositif de cuisson (500 ; 600 ; 700 ; 800) selon la revendication 13, **caractérisé en ce que** l'étape de mise en forme du support de cuisson (510; 610 ; 710 ; 810) est réalisée par emboutissage ou par fluotournage.

## Patentansprüche

1. Kochvorrichtung (100; 200; 300; 400), umfassend eine Kochunterlage (110; 210; 310; 410), die eine Kochfläche (111; 311) und eine Heizfläche (112; 212; 312; 412) aufweist, eine Schicht aus anisotropem Graphit (124; 224; 324; 424), die zwischen einer Aluminiumschicht (121; 221; 321; 421) und einer weiteren Aluminiumschicht (115; 215; 315; 415) eingekapselt ist, wobei die Aluminiumschicht (121; 221; 321; 421) und die Schicht aus anisotropem Graphit (124; 224; 324; 424) zu einem mehrschichtigen Verteilerboden (120; 220; 320; 420) gehören, wobei die Schicht aus anisotropem Graphit (124; 224; 324; 424) an die Heizfläche (112; 212; 312; 412) angrenzt und die weitere Aluminiumschicht (115; 215; 315; 415) zur Heizfläche (112; 212; 312; 412) gehört,
**dadurch gekennzeichnet, dass** die Aluminiumschicht (121; 221; 321; 421) metallurgisch mit der Heizfläche (112; 212; 312; 412) zusammengebaut ist, indem ein Teil der Heizfläche (112; 212; 312; 412) um die Aluminiumschicht (121; 221; 321; 421) herum freigelassen wird.

2. Kochvorrichtung (500; 600; 700; 800), umfassend eine Kochunterlage (510; 610; 710; 810), die eine Kochfläche (511; 711) und eine Heizfläche (512; 612; 712; 812) aufweist, eine Schicht aus anisotropem Graphit (524; 624; 724; 824), die zwischen einer Aluminiumschicht (522; 622; 722; 822) und einer weiteren Aluminiumschicht (523; 623; 723; 823) eingekapselt ist, wobei die Aluminiumschicht (522; 622; 722; 822) und die Schicht aus anisotropem Graphit (524; 624; 724; 824) zu einem mehrschichtigen Verteilerboden (520; 620; 720; 820) gehören, wobei die Schicht aus anisotropem Graphit (524; 624; 724; 824) zwischen der Aluminiumschicht (522; 622; 722; 822) und der weiteren Aluminiumschicht (523; 623; 723; 823) eingerichtet ist,
**dadurch gekennzeichnet, dass** die Aluminiumschicht (522; 622; 722; 822) metallurgisch mit der Heizfläche (512; 612; 712; 812) zusammengebaut ist, indem ein Teil der Heizfläche (512; 612; 712; 812) um die Aluminiumschicht (522; 622; 722; 822) herum freigelassen wird, dadurch, dass die Aluminiumschicht (522; 622; 722; 822) zwischen der Heizfläche (512; 612; 712; 812) und der Schicht aus anisotropem Graphit (524; 624; 724; 824) eingerichtet ist, dadurch, dass die weitere Aluminiumschicht (523; 623; 723; 823) zum mehrschichtigen Verteilerboden (420; 520; 620; 720; 820) gehört.

3. Kochvorrichtung (500; 600; 700; 800) nach Anspruch 2, **dadurch gekennzeichnet, dass** die Heizfläche (512; 612; 712; 812) aus rostfreiem Stahl hergestellt ist.

4. Kochvorrichtung (300; 400; 700; 800) nach einem der Ansprüche 1 bis 3, **dadurch gekennzeichnet, dass** die Schicht aus anisotropem Graphit (324; 424; 724; 824) ringförmig ist.

5. Kochvorrichtung (100; 200; 300; 400; 500; 600; 700; 800) nach einem der Ansprüche 1 bis 4, **dadurch gekennzeichnet, dass** die Schicht aus anisotropem Graphit (124; 224; 324; 424; 524; 624; 724; 824) mindestens eine Perforation umfasst.

6. Kochvorrichtung (100; 200; 300; 400; 500; 600; 700; 800) nach einem der Ansprüche 1 bis 5, **dadurch gekennzeichnet, dass** die Schicht aus anisotropem Graphit (124; 224; 524; 624) ohne Perforationen ist.

7. Kochvorrichtung (100; 200; 300; 400; 500; 600; 700; 800) nach einem der Ansprüche 1 bis 6, **dadurch gekennzeichnet, dass** der mehrschichtige Verteilerboden (120; 220; 320; 420; 520; 620; 720; 820) eine Außenschicht (125; 225; 325; 425; 525; 625; 725; 825) umfasst, die aus ferritischem rostfreiem Stahl hergestellt ist.

8. Kochvorrichtung (100; 200; 300; 400; 500; 600; 700; 800) nach Anspruch 7, **dadurch gekennzeichnet, dass** die Außenschicht (125; 225; 325; 425; 525; 625; 725; 825) eine Manschette bildet, die einen ringförmigen Rand aufweist, der mit der Heizfläche (112; 212; 312; 412; 512; 612; 712; 812) in Kontakt kommt.

9. Verfahren zum Erhalten einer Kochvorrichtung (100; 200; 300; 400), umfassend die folgenden Schritte:
- Bereitstellen und/oder Erhalten einer Schicht aus anisotropem Graphit (124; 224; 324; 424), einer Aluminiumschicht (121; 221; 321; 421), die geeignet ist, die Schicht aus anisotropem Graphit (124; 224; 324; 424) abzudecken, und einer Kochunterlage (110; 210; 310; 410), die eine Heizfläche (112; 212; 312; 412) umfasst, die eine weitere Aluminiumschicht (115; 215; 315; 415) aufweist, die geeignet ist, die Aluminiumschicht (121; 221; 321; 421) abzudecken;
- Aufstapelung der Aluminiumschicht (121; 221; 321; 421), der Schicht aus anisotropem Graphit (124; 224; 324; 424) und der Kochunterlage (110; 210; 310; 410) oder umgekehrt, wobei die Schicht aus anisotropem Graphit (124; 224; 324; 424) einen ringförmigen Teil der Aluminiumschicht (121; 221; 321; 421) freilässt, wobei sich die Heizfläche (112; 212; 312; 412) um die Aluminiumschicht (121; 221; 321; 421) herum erstreckt, wobei die Schicht aus anisotropem Graphit (124; 224; 324; 424) und die Aluminiumschicht (121; 221; 321; 421) zu einem mehrschichtigen Verteilerboden (120; 220; 320; 420) gehören;
- metallurgisches Zusammenbauen, durch Heißprägen oder durch belastete Heißdiffusion, der Heizfläche (112; 212; 312; 412) aus Aluminium mit der Aluminiumschicht (121; 221; 321; 421) um die Schicht aus anisotropem Graphit (124; 224; 324; 424) herum, wobei die Aluminiumschicht (121; 221; 321; 421) metallurgisch mit der Heizfläche (112; 212; 312; 412) zusammmengebaut wird, indem ein Teil der Heizfläche (112; 212; 312; 412) um die Aluminiumschicht (121; 221; 321; 421) herum freigelassen wird.

10. Verfahren zum Erhalten einer Kochvorrichtung (100; 200; 300; 400) nach Anspruch 9, **dadurch gekennzeichnet, dass** es einen Schritt der Formgebung der Kochunterlage (110; 210; 310; 410) zum Erhalten eines Kochbehälters umfasst.

11. Verfahren zum Erhalten einer Kochvorrichtung (100; 200; 300; 400) nach Anspruch 10, **dadurch gekennzeichnet, dass** der Schritt der Formgebung der Kochunterlage (110; 210; 310; 410) durch Tiefziehen oder durch Schubformen durchgeführt wird.

12. Verfahren zum Erhalten einer Kochvorrichtung (500; 600; 700; 800), das die folgenden Schritte umfasst:
- Bereitstellen und/oder Erhalten einer Schicht aus anisotropem Graphit (524; 624; 724; 824), einer Aluminiumschicht (522; 622; 722; 822), die geeignet ist, die Schicht aus anisotropem Graphit (524; 624; 724; 824) abzudecken, einer weiteren Aluminiumschicht (523; 623; 723; 823), die geeignet ist, die Schicht aus anisotropem Graphit (524; 624; 724; 824) abzudecken, und einer Kochunterlage (510; 610; 710; 810), die eine Heizfläche (512; 612; 712; 812) umfasst, die geeignet ist, die Aluminiumschicht (522; 622; 722; 822) abzudecken;
- Aufstapelung der weiteren Aluminiumschicht (523; 623; 723; 823), der Schicht aus anisotropem Graphit (524; 624; 724; 824), der Aluminiumschicht (522; 622; 722; 822) und der Kochunterlage ((510; 610; 710; 810) oder umgekehrt, wobei die Schicht aus anisotropem Graphit (524; 624; 724; 824) einen ringförmigen Teil der Aluminiumschicht (522; 622; 722; 822) freilässt, wobei die Schicht aus anisotropem Graphit (524; 624; 724; 824) einen weiteren ringförmigen Teil der weiteren Aluminiumschicht (523; 623; 723; 823) freilässt, wobei sich der ringförmige Teil der Aluminiumschicht (522; 622; 722; 822) auf ringförmige Weise dem weiteren ringförmigen Teil der weiteren Aluminiumschicht (523; 623; 723; 823) zugewandt erstreckt, wobei sich die Heizfläche (512; 612; 712; 812) um die Aluminiumschicht (522; 622; 722; 822) herum erstreckt, wobei die Schicht aus anisotropem Graphit (524; 624; 724; 824), die Aluminiumschicht (522; 622; 722; 822) und die weitere Aluminiumschicht (523; 623; 723; 823) zu einem mehrschichtigen Verteilerboden (520; 620; 720; 820) gehören.
- metallurgisches Zusammenbauen, durch Heißprägen oder durch belastete Heißdiffusion, einerseits der Aluminiumschicht (522; 622; 722; 822) mit der Heizfläche (512; 612; 712; 812) und andererseits der weiteren Aluminiumschicht (523; 623; 723; 823) um die Schicht aus anisotropem Graphit (524; 624; 724; 824) herum, wobei die Aluminiumschicht (522; 622; 722; 822) metallurgisch mit der Heizfläche (512; 612; 712; 812) zusammengebaut wird, indem ein Teil der Heizfläche (512; 612; 712; 812) um die Aluminiumschicht (522; 622; 722; 822) herum freigelassen wird.

13. Verfahren zum Erhalten einer Kochvorrichtung (500; 600; 700; 800) nach Anspruch 12, **dadurch gekennzeichnet, dass** es einen Schritt der Formgebung der Kochunterlage (510; 610; 710; 810) zum Erhalten eines Kochbehälters umfasst.

14. Verfahren zum Erhalten einer Kochvorrichtung (500; 600; 700; 800) nach Anspruch 13,
**dadurch gekennzeichnet, dass** der Schritt der Formgebung der Kochunterlage (510; 610; 710; 810) durch Tiefziehen oder durch Schubformen durchgeführt wird.

## Claims

1. Cooking device (100; 200; 300; 400) comprising a cooking support member (110; 210; 310; 410) having a cooking face (111; 311) and a heating face (112; 212; 312; 412), a layer of anisotropic graphite (124; 224; 324; 424) being encapsulated between an aluminium layer (121; 221; 321; 421) and another aluminium layer (115; 215; 315; 415), the aluminium layer (121; 221; 321; 421) and the layer of anisotropic graphite (124; 224; 324; 424) belonging to a multi-layer diffuser base (120; 220; 320; 420), the layer of anisotropic graphite (124; 224; 324; 424) being adjacent to the heating face (112; 212; 312; 412), and the other aluminium layer (115; 215; 315; 415) belonging to the heating face (112; 212; 312; 412),
**characterised in that** the aluminium layer (121; 221; 321; 421) is metallurgically joined to the heating face (112; 212; 312; 412) leaving one portion of the heating face (112; 212; 312; 412) free around the aluminium layer (121; 221; 321; 421).

2. Cooking device (500; 600; 700; 800) comprising a cooking support member (510; 610; 710; 810) having a cooking face (511; 711) and a heating face (512; 612; 712; 812), a layer of anisotropic graphite (524; 624; 724; 824) being encapsulated between an aluminium layer (522; 622; 722; 822) and another aluminium layer (523; 623; 723; 823), the aluminium layer (522; 622; 722; 822) and the layer of anisotropic graphite (524; 624; 724; 824) belonging to a multi-layer diffuser base (520; 620; 720; 820), the layer of anisotropic graphite (524; 624; 724; 824) being arranged between the aluminium layer (522; 622; 722; 822) and the other aluminium layer (523; 623; 723; 823),
**characterised in that** the aluminium layer (522; 622; 722; 822) is metallurgically joined to the heating face (512; 612; 712; 812) leaving one portion of the heating face (512; 612; 712; 812) free around the aluminium layer (522; 622; 722; 822), **in that** the aluminium layer (522; 622; 722; 822) is arranged between the heating face (512; 612; 712; 812) and the layer of anisotropic graphite (524; 624; 724; 824), **in that** the other aluminium layer (523; 623; 723; 823) belongs to the multi-layer diffuser base (420; 520; 620; 720; 820).

3. Cooking device (500; 600; 700; 800) according to claim 2, **characterised in that** the heating face (512; 612; 712; 812) is made of stainless steel.

4. Cooking device (300; 400; 700; 800) according to one of claims 1 to 3, **characterised in that** the layer of anisotropic graphite (324; 424; 724; 824) is annular.

5. Cooking device (100; 200; 300; 400; 500; 600; 700; 800) according to one of claims 1 to 4, **characterised in that** the layer of anisotropic graphite (124; 224; 324; 424; 524; 624; 724; 824) comprises at least one perforation.

6. Cooking device (100; 200; 300; 400; 500; 600; 700; 800) according to one of claims 1 to 5, **characterised in that** the layer of anisotropic graphite (124; 224; 524; 624) has no perforations.

7. Cooking device (100; 200; 300; 400; 500; 600; 700; 800) according to one of claims 1 to 6, **characterised in that** the multi-layer diffuser base (120; 220; 320; 420; 520; 620; 720; 820) comprises an outer layer (125; 225; 325; 425; 525; 625; 725; 825) made of ferritic stainless steel.

8. Cooking device (100; 200; 300; 400; 500; 600; 700; 800) according to claim 7, **characterised in that** the outer layer (125; 225; 325; 425; 525; 625; 725; 825) forms a cup having an annular edge coming into contact with the heating face (112; 212; 312; 412; 512; 612; 712; 812).

9. Method for obtaining a cooking device (100; 200; 300; 400) comprising the following steps:
- Providing and/or obtaining a layer of anisotropic graphite (124; 224; 324; 424), an aluminium layer (121; 221; 321; 421) capable of covering the layer of anisotropic graphite (124; 224; 324; 424), and a cooking support member (110; 210; 310; 410) comprising a heating face (112; 212; 312; 412) having another aluminium layer (115; 215; 315; 415) capable of covering the aluminium layer (121; 221; 321; 421);
- Stacking of the aluminium layer (121; 221; 321; 421), of the layer of anisotropic graphite (124; 224; 324; 424) and of the cooking support member (110; 210; 310; 410), or vice versa, the layer of anisotropic graphite (124; 224; 324; 424) leaving an annular portion of the aluminium layer (121; 221; 321; 421) free, the heating face (112; 212; 312; 412) extending around the aluminium layer (121; 221; 321; 421), the layer of anisotropic graphite (124; 224; 324; 424) and the aluminium layer (121; 221; 321; 421) belonging to a multi-layer diffuser base (120; 220; 320; 420);
- Metallurgic assembly, by hot-stamping or by under-load hot diffusion, of the aluminium heating face (112; 212; 312; 412) with the aluminium layer (121; 221; 321; 421) around the layer of anisotropic graphite (124; 224; 324; 424), the aluminium layer (121; 221; 321; 421) being metallurgically joined to the heating face (112; 212; 312; 412) by leaving one portion of the heating face (112; 212; 312; 412) free around the aluminium layer (121; 221; 321; 421).

10. Method for obtaining a cooking device (100; 200; 300; 400) according to claim 9, **characterised in that** it comprises a step of shaping the cooking support member (110; 210; 310; 410) to obtain a cooking vessel.

11. Method for obtaining a cooking device (100; 200; 300; 400) according to claim 10, **characterised in that** the step of shaping the cooking support member (110; 210; 310; 410) is done by stamping or by flow-forming.

12. Method for obtaining a cooking device (500; 600; 700; 800) comprising the following steps:
- Providing and/or obtaining a layer of anisotropic graphite (524; 624; 724; 824), an aluminium layer (522; 622; 722; 822) capable of covering the layer of anisotropic graphite (524; 624; 724; 824), another aluminium layer (523; 623; 723; 823) capable of covering the layer of anisotropic graphite (524; 624; 724; 824), and a cooking support member (510; 610; 710; 810) comprising a heating face (512; 612; 712; 812) capable of covering the aluminium layer (522; 622; 722; 822);
- Stacking of the other aluminium layer (523; 623; 723; 823), of the layer of anisotropic graphite (524; 624; 724; 824), of the aluminium layer (522; 622; 722; 822), and of the cooking support member (510; 610; 710; 810), or vice versa, the layer of anisotropic graphite (524; 624; 724; 824) leaving an annular portion of the aluminium layer (522; 622; 722; 822) free, the layer of anisotropic graphite (524; 624; 724; 824) leaving another annular portion of the other aluminium layer (523; 623; 723; 823) free, the annular portion of the aluminium layer (522; 622; 722; 822) annularly extending facing the other annular portion of the other aluminium layer (523; 623; 723; 823), the heating face (512; 612; 712; 812) extending around the aluminium layer (522; 622; 722; 822), the layer of anisotropic graphite (524; 624; 724; 824), the aluminium layer (522; 622; 722; 822) and the other aluminium layer (523; 623; 723; 823) belonging to a multi-layer diffuser base (520; 620; 720; 820).
- Metallurgic joining, by hot-stamping or by under-load hot diffusion, of the aluminium layer (522; 622; 722; 822) on the one hand with the heating layer (512; 612; 712; 812) and on the other hand, with the other aluminium layer (523; 623; 723; 823) around the layer of anisotropic graphite (524; 624; 724; 824), the aluminium layer (522; 622; 722; 822) being metallurgically joined to the heating face (512; 612; 712; 812) by leaving one portion of the heating face (512; 612; 712; 812) free around the aluminium layer (522; 622; 722; 822).

13. Method for obtaining a cooking device (500; 600; 700; 800) according to claim 12, **characterised in that** it comprises a step of shaping the cooking support member (510; 610; 710; 810) to obtain a cooking vessel.

14. Method for obtaining a cooking device (500; 600; 700; 800) according to claim 13,
**characterised in that** the step of shaping the cooking support member (510; 610; 710; 810) is done by stamping or by flow-forming.
